(19) Europäisches Patentamt / European Patent Office / Office européen des brevets

(11) **EP 3 803 068 B1**

(12) **FASCICULE DE BREVET EUROPEEN**

(45) Date de publication et mention de la délivrance du brevet:
**11.01.2023 Bulletin 2023/02**

(21) Numéro de dépôt: **19726007.8**

(22) Date de dépôt: **28.05.2019**

(51) Classification Internationale des Brevets (IPC):
**F01M 11/10** *(2006.01)* **F02D 35/02** *(2006.01)*

(52) Classification Coopérative des Brevets (CPC):
**F01M 11/10; F02D 35/023; F02D 35/028;**
F01M 2011/1466; F01M 2011/1486;
F02D 2200/0614; F16N 2260/18

(86) Numéro de dépôt international:
**PCT/EP2019/063724**

(87) Numéro de publication internationale:
**WO 2019/229021 (05.12.2019 Gazette 2019/49)**

(54) **SYSTÈME ET PROCÉDÉ D'ESTIMATION DE LA QUANTITÉ DE PARTICULES POLLUANTES DANS L'HUILE MOTEUR D'UN MOTEUR À COMBUSTION INTERNE DE TYPE DIESEL**

SYSTEM UND VERFAHREN ZUR ABSCHÄTZUNG DER SCHADSTOFFPARTIKELMENGE IM MOTORÖL EINER DIESELBRENNKRAFTMASCHINE

SYSTEM AND METHOD FOR ESTIMATING THE QUANTITY OF POLLUTING PARTICLES IN THE ENGINE OIL OF A DIESEL INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2018 FR 1854496**

(43) Date de publication de la demande:
**14.04.2021 Bulletin 2021/15**

(73) Titulaire: **Renault s.a.s**
**92100 Boulogne Billancourt (FR)**

(72) Inventeur: **GASTALDI, Patrick**
**91190 Gif sur Yvette (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
EP-A2- 2 653 677     DE-A1-102009 001 541
DE-A1-102011 014 813     GB-A- 2 418 988

**Description**

La présente invention concerne le domaine des moteurs à combustion interne, notamment des moteurs de type Diesel à injection directe.

Plus particulièrement, la présente invention concerne le domaine de la fiabilité des moteurs Diesel, et notamment l'estimation de la quantité de suies ou matières charbonneuses provenant de la combustion dans le cylindre et présentes dans l'huile moteur.

Le mécanisme de pollution de l'huile moteur par les suies est expliqué comme suit : durant la combustion Diesel, puis la détente, les suies produites par la combustion sont dirigées vers des zones riches en oxygène imbrûlé, ce qui permet la post-oxydation des suies et ainsi la réduction des émissions de particules à l'échappement ou vers le filtre à particules.

Toutefois, ce phénomène entraîne un contact entre les suies destinées à être post-oxydées et la paroi du cylindre moteur recouverte d'huile moteur. Les suies sont donc absorbées par l'huile moteur qui se trouve ainsi polluée par ces particules. L'huile moteur est ensuite raclée par les segments.

La pollution de l'huile moteur par les particules est d'autant plus importante que la combustion est tardive dans le cylindre, et que la quantité de fumée formée durant la combustion est importante.

Au fil des kilomètres parcourus, les particules de suies absorbées par l'huile moteur viennent détériorer les capacités de lubrification de l'huile et peuvent générer une accélération de l'usure mécanique, par exemple de la distribution, et une réduction de l'intervalle de vidange qui s'avère alors nécessaire.

Il existe aujourd'hui des solutions afin de réduire les émissions de particules à l'échappement, notamment par l'optimisation de l'injection de carburant, de la forme du bol de piston, ou par l'utilisation d'un filtre à particules. Toutefois, le passage des particules de suies dans l'huile moteur n'est que partiellement résolu par les solutions actuelles.

On connait des procédés permettant de réduire le passage des matières charbonneuses dans l'huile moteur. Toutefois, aucun des procédés connus ne permet de supprimer ce passage, de sorte qu'il est nécessaire de connaitre l'évolution du taux de ces matières dans le but d'optimiser les vidanges d'huile moteur.

On peut se référer au document US 6 253 601 - B1 qui décrit un procédé pour optimiser les intervalles de vidange, notamment à partir d'une d'estimation de la quantité de matières charbonneuses en fonction du point de fonctionnement régime/couple moteur.

Toutefois, un tel procédé est particulièrement complexe à mettre en œuvre car il se fonde sur une pluralité de critères, et notamment sur des données fournies par des capteurs de mesure des caractéristiques de l'huile moteur, qui sont particulièrement coûteux et dont la fiabilité évolue au fil des kilomètres. EP2653677 A2 divulgue un autre procédé connu d'estimation des particules polluantes dans l'huile moteur.

Il existe donc un besoin d'améliorer les procédés et systèmes d'estimation des particules de suies présentes dans l'huile moteur d'un moteur à combustion de type Diesel,

Le but de la présente invention est donc de permettre une estimation des particules de suies présentes dans l'huile moteur d'un moteur à combustion de type Diesel, fiable et facile à mettre en œuvre, et ne dépendant pas des paramètres du réglage du moteur, telle que l'avance d'injection, le taux de recirculation des gaz d'échappement, la pression d'injection à laquelle le carburant est injecté dans la chambre de combustion, la richesse etc..., ainsi que, notamment, de la température de l'air d'admission et de la température des gaz d'échappement recirculés.

L'invention a pour objet un procédé d'optimisation de l'intervalle de vidange de l'huile moteur d'un moteur à combustion interne de type Diesel comprenant au moins un capteur de pression de cylindre et une unité de commande, dans lequel on estime un pourcentage en masse de particules polluantes dans l'huile moteur pour une durée de fonctionnement relativement longue prédéterminée du moteur, par exemple, comprise entre 50h et 150h de fonctionnement du moteur, par exemple égale à 100h de fonctionnement du moteur, en fonction de la valeur d'un angle, en degré de vilebrequin, pour lequel 90% du combustible a été consommé, d'une valeur de l'opacité des fumées à l'échappement et de la quantité de carburant injectée dans la chambre de combustion. La quantité de carburant injectée dans la chambre de combustion peut être obtenue à partir de cartographies d'injection et correspond à la quantité de carburant injectée pour obtenir le couple moteur.

On peut ainsi estimer le taux de matières charbonneuses ajoutées à l'huile moteur au bout d'une telle durée de fonctionnement relativement longue que le moteur passerait sur un point de fonctionnement stabilisé donné, en fonction de deux résultats de la combustion et du débit de carburant, point de fonctionnement par point de fonctionnement, en utilisant uniquement les grandeurs accessibles par le calculateur moteur.

Selon l'invention, pour estimer un pourcentage en masse de particules polluantes dans l'huile moteur pour une durée de fonctionnement réelle quelconque du moteur, pendant laquelle le point de fonctionnement du moteur est amené à évoluer, on estime en temps réel, pour chaque durée élémentaire (correspondant à un pas de calcul du procédé) assez faible pour que le point de fonctionnement régime/couple du moteur soit sensiblement constant, un taux de matières polluantes ajoutées à l'huile moteur pendant ladite durée élémentaire, comme égal au produit du taux de matières charbonneuses ajoutées au bout de la durée de fonctionnement relativement longue prédéterminée, multiplié par la quotient de ladite durée élémentaire de fonctionnement divisé par ladite durée de fonctionnement relativement longue prédéterminée.

En d'autres termes, pour estimer un pourcentage en masse de particules polluantes dans l'huile moteur pour une durée de fonctionnement du moteur, on estime, pour chaque point de fonctionnement régime/couple du moteur, un taux de matières polluantes présentes dans l'huile moteur après une durée prédéterminée relativement longue que le moteur passerait sur ledit point de fonctionnement, et on en déduit une estimation d'un taux de matières polluantes ajoutées à l'huile du moteur pendant une durée élémentaire prédéterminée relativement faible, pendant laquelle le moteur fonctionne sur un point de fonctionnement régime/couple (i) sensiblement stabilisé.

On peut ensuite estimer, en temps réel, l'accumulation des suies dans l'huile moteur et ainsi optimiser l'intervalle de vidange de l'huile moteur sans altérer la fiabilité du moteur et tout en réduisant au maximum les frais d'entretien.

On additionne l'ensemble des valeurs de taux de matières polluantes ajoutées à l'huile moteur pendant toutes les durées élémentaires correspondant aux pas de calcul du procédé qui ont été calculées depuis un instant initial où le taux de matières polluantes présentes dans l'huile est nul jusqu'à l'instant courant correspondant à la durée de fonctionnement courante du moteur, afin d'obtenir la valeur finale du taux de matières polluantes dans l'huile moteur, c'est-à-dire la valeur du taux de matières polluantes présentes dans l'huile à l'instant courant.

On compare ladite valeur finale du taux de matières polluantes dans l'huile moteur avec une valeur de seuil, lorsque la valeur finale du taux de matières polluantes dans l'huile moteur est supérieure à ladite valeur de seuil, on émet une consigne de vidange et lorsque la valeur finale du taux de matières polluantes dans l'huile moteur pour un pas de temps est inférieure à ladite valeur de seuil, on incrémente la valeur finale du taux de matières polluantes de la valeur finale pour le pas suivant.

Lorsque la vidange de l'huile moteur est réalisée, on peut réinitialiser la valeur finale pour le pas précédent.

Selon un second aspect, l'invention concerne un système d'optimisation de l'intervalle de vidange de l'huile moteur d'un moteur à combustion interne de type Diesel comprenant au moins un capteur de pression de cylindre et une unité de commande.

Le système comprend un module d'estimation du pourcentage en masse de particules polluantes dans l'huile moteur pour une durée de fonctionnement relativement longue prédéterminée du moteur sur un point de fonctionnement donné, par exemple, comprise entre 50h et 150h de fonctionnement du moteur, par exemple égale à 100h de fonctionnement du moteur, en fonction de la valeur d'un angle, en degré de vilebrequin, pour lequel 90% du combustible a été consommé en fonction de la pression mesurée dans le cylindre, d'une valeur de l'opacité des fumées à l'échappement et de la quantité de carburant injectée dans la chambre de combustion.

La quantité de carburant injectée dans la chambre de combustion peut être obtenue à partir de cartographies d'injection et correspond à la quantité de carburant injectée pour obtenir le couple moteur.

On peut ainsi estimer le taux de matières charbonneuses ajoutées à l'huile moteur au bout d'une durée de fonctionnement relativement longue prédéterminée que le moteur passerait sur un point de fonctionnement stabilisé donné, en fonction de deux résultats de la combustion et du débit de carburant, point de fonctionnement par point de fonctionnement, en utilisant uniquement les grandeurs accessibles par le calculateur moteur.

Le système comprend un module d'estimation en temps réel, pour une durée élémentaire prédéterminée correspondant à un pas de calcul (ladite durée élémentaire étant choisie assez faible pour que le point de fonctionnement régime/couple du moteur soit sensiblement constant), du pourcentage en masse de matières polluantes ajoutées à l'huile moteur pendant ladite durée élémentaire.

Le module d'estimation du pourcentage de particules polluantes dans l'huile moteur comprend un module d'estimation en temps réel, pour chaque point de fonctionnement régime/couple du moteur, d'un taux de matières polluantes présentes dans l'huile moteur.

Le module d'estimation du pourcentage de particules polluantes dans l'huile moteur comprend un module pour additionner l'ensemble des valeurs de taux de matières polluantes ajoutées à l'huile moteur pendant toutes les durées élémentaires qui ont été calculées entre un instant initial où le taux de matières polluantes présentes dans l'huile est nul jusqu'à un instant courant donné, afin d'obtenir la valeur finale du taux de matières polluantes dans l'huile moteur pour un instant courant donné correspondant à une durée de fonctionnement courante du moteur.

Le système comprend un module de comparaison de ladite valeur finale du taux de matières polluantes dans l'huile moteur avec une valeur de seuil.

Ledit système comprend en outre un module d'émission d'une consigne de vidange lorsque la valeur finale du taux de matières polluantes dans l'huile moteur est supérieure à ladite valeur de seuil et un module d'incrémentation de la valeur finale du taux de matières polluantes par la valeur finale pour le pas précèdent si la valeur finale du taux de matières polluantes dans l'huile moteur pour un pas de temps est inférieure à ladite valeur de seuil.

Avantageusement, le système comprend un module de réinitialisation lorsque la vidange de l'huile moteur est réalisée.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre, de manière schématique, un système d'optimisation de l'intervalle de vidange de l'huile moteur selon l'invention ; et
- la figure 2 représente un mode de mise en œuvre d'un procédé d'optimisation de l'intervalle de vidange de l'huile moteur selon l'invention.

Un système d'optimisation de l'intervalle de vidange, référencé 10 dans son ensemble, est destiné à être intégré dans une unité de commande d'un moteur à combustion interne de type Diesel (non représenté), comprenant une chambre de combustion dans les pistons du moteur et au moins un capteur de pression de cylindre P.

Le système 10 comprend un module 12 d'estimation du pourcentage en masse de particules polluantes TMC dans l'huile moteur pour une durée de fonctionnement relativement longue prédéterminée T du moteur, par exemple, 100h de fonctionnement du moteur.

Le module 12 d'estimation du pourcentage de particules polluantes dans l'huile moteur comprend un module 14 d'estimation, pour chaque point de fonctionnement régime/couple, d'un taux de matières polluantes présentes dans l'huile moteur au bout de ladite durée de fonctionnement relativement longue prédéterminée T que le moteur passerait sur ledit point de fonctionnement constant, en fonction de deux résultats de la combustion et du débit de carburant dans le moteur.

Les deux résultats de la combustion comprennent la valeur d'un angle CA90, en degré de vilebrequin, classiquement en degré d'angle par rapport au point mort haut (PMH) du cylindre considéré, pour lequel 90% du combustible a été consommé, et la valeur de l'opacité des fumées FSN.

Le taux TMC de matières polluantes présentes dans l'huile moteur au bout de la durée relativement longue prédéterminée T, pour chaque point de fonctionnement i régime/couple, est calculé par le module 14 d'estimation selon l'équation suivante qui en donne, plus précisément, le logarithme :

$$Log(TMC) = K1 \times Qe \times CA90 + K2 \times FSN + K3 \qquad \textbf{Eq.1}$$

Avec :

Qe, la quantité de carburant injectée dans la chambre de combustion, exprimée en milligrammes par coup mg/cp ;
CA90, la position angulaire dans le cycle moteur pour laquelle 90% du carburant a été brûlé, exprimée en degré vilebrequin ;
FSN, l'opacité des fumées ;
K1, K2, K3, des coefficients empiriques dépendant uniquement du régime moteur. Ces coefficients sont constants pour une géométrie du moteur et des caractéristiques techniques du système de combustion données. Ces coefficients peuvent être calibrés en banc d'essai par le constructeur automobile.

L'angle CA90 peut être calculé, à titre nullement limitatif, est indirectement en fonction du dégagement d'énergie apparent, par la méthode suivante : A chaque instant t d'un cycle de combustion dans le cylindre, correspondant à chaque valeur courante angle $\alpha$ de vilebrequin, on sait calculer le dégagement d'énergie apparent cumulé de la fraction de la masse de comburant et de carburant introduite dans le cylindre qui y est déjà brûlée au moment où l'angle de vilebrequin atteint cette valeur courante a, comme l'intégrale angulaire de l'équation 2 suivante, depuis l'angle auquel débute la combustion, par application du premier principe de la thermodynamique :

$$\Delta Q_{COMB} = \int_{\alpha} dQ_{COMB} = \int m.C_V.d\left(\frac{P.V}{n.R}\right) + PdV \quad \textbf{Eq.2}$$

Avec

$dQ_{COMB}$, la quantité d'énergie élémentaire dégagée ou transfert thermique ; exprimée en J ;
m, la masse de carburant et de comburant enfermée dans le cylindre, exprimée en kg ;
$C_V$ , la capacité thermique du système à volume constant, exprimée en J.K-1 ;
P, la pression de cylindre, ou pression instantanée régnant dans le cylindre exprimée en Pa ;
V, le volume instantané de la chambre de combustion,, image de la position du piston dans le cylindre, exprimée en L ;
n, la quantité de matière, exprimée en mole ; et
R ; la constante des gaz parfaits, exprimée en $J.K^{-1}.mol$

L'intégrale du dégagement d'énergie sur la totalité du cycle est reliée à la masse du carburant selon l'équation

suivante :

$$\Delta Q_{COMB} = (M_{carburant\_brulé} - M_{carburant\_imbrûlé}).PCI \qquad \textbf{Eq.3}$$

Avec :

M, la masse de carburant brûlé ou imbrûlé, exprimée en Kg ; et
PCI, le pouvoir calorifique inférieur.

Pour un moteur Diesel, la masse de carburant imbrûlé peut être négligée.

La pression P de cylindre est mesurée à chaque instant par le capteur de pression de cylindre.

La valeur du volume V est calculée selon l'équation suivante :

$$V(\alpha) = V_{cc} + \frac{\pi D^2}{4}[l + r\left(1 - \cos(\alpha)\right) - \sqrt{l^2 - r^2 \sin(\alpha)^2}] \qquad \textbf{Eq.4}$$

Avec :

Vcc, le volume mort au point mort haut, exprimé en L ;
l, la longueur de la bielle, exprimée en m ;
r, le rayon du maneton, exprimé en m ; et
$\alpha$, l'angle de vilebrequin fourni par des capteurs de position angulaire de vilebrequin et d'arbre à came, nécessaires au fonctionnement du système d'injection.

Ainsi, connaissant par ailleurs le dégagement total d'énergie $Q_{COMB}$ de la totalité de la masse de carburant et de comburant m introduite et enfermée dans le cylindre, on déduit que l'angle $\alpha$ de vilebrequin atteint la position CA90 lorsque l'intégrale calculée par l'équation 1 atteint 90% du dégagement total d'énergie $Q_{COMB}$.

Le calcul du CA90 n'est pas limité à la méthode décrite ci-dessus. On pourrait notamment déterminer la valeur du CA90 à partir de la pression de gaz mesurée directement dans la chambre de combustion, tel que décrit, par exemple, dans la demande de brevet JP 2009 168 708.

La valeur Qe est directement obtenue à partir de cartographies d'injection et correspond à la quantité de carburant injectée pour obtenir le couple moteur.

La valeur de l'opacité des fumées à l'échappement FSN peut être soit mesurée directement par un capteur, tel que décrit, par exemple, dans la demande de brevet DE 102015225745, soit calculée à partir de modèles mathématiques implantées dans le calculateur moteur, tel que décrit, par exemple, dans la demande de brevet JP 2015 190 397.

Le module 12 d'estimation du pourcentage de particules polluantes dans l'huile moteur comprend en outre un module 15 d'estimation en temps réel, pour une durée élémentaire dT de fonctionnement du moteur pendant laquelle le point de fonctionnement régime/couple i du moteur est sensiblement constant, d'un taux de matières polluantes ajoutées dTMC à l'huile moteur pendant ladite durée élémentaire dT, selon les équations suivantes :

$$dTMC = TMC \text{ x } (dT/T) \qquad \textbf{Eq.5}$$

c'est-à-dire :

$$dTMC = \exp(K1 \text{ x } Qe \text{ x } CA90 + K2 \text{ x } FSN + K3) \text{ x } (dT/T) \qquad \textbf{Equ.6}$$

La durée élémentaire dT correspond au pas de calcul du procédé, c'est-à-dire à la durée qui sépare deux instants Tn et Tn+1 auxquels deux calculs successifs sont réalisés par le module 15.

Le module 12 d'estimation du pourcentage de particules polluantes dans l'huile moteur comprend en outre un module 16 pour additionner l'ensemble des valeurs de taux de matières polluantes dTMC ajoutées à l'huile moteur pour chaque durée élémentaire de fonctionnement du moteur, sur les points de fonctionnement i régime/couple courant respectifs pendant ces durées élémentaires, calculées par le module 15 d'estimation, afin d'obtenir la valeur finale

TMC(Tn) du taux de matières polluantes dans l'huile moteur à un instant courant Tn correspondant à une durée de fonctionnement donnée du moteur.

Le système 10 d'optimisation de l'intervalle de vidange comprend en outre un module 18 de comparaison de ladite valeur finale TMC(Tn) du taux de matières polluantes dans l'huile moteur avec une valeur de seuil S1 et un module 20 d'émission d'une consigne de vidange lorsque la valeur finale TMC(Tn) du taux de matières polluantes dans l'huile moteur est supérieure à ladite valeur de seuil S1.

Si la valeur finale TMC(Tn) du taux de matières polluantes dans l'huile moteur pour une durée de fonctionnement Tn de temps est inférieure à ladite valeur de seuil S1, la valeur finale TMC(Tn) du taux de matières polluantes est incrémentée une nouvelle fois par le module 16 d'un taux de matières polluantes ajoutées à l'huile pendant la durée élémentaire suivante de fonctionnement du moteur, de manière à fournir une nouvelle valeur finale TMC(Tn+1) à l'instant suivant, c'est-à-dire pour une durée de fonctionnement Tn+1 plus longue du moteur.

Le système 10 d'optimisation de l'intervalle de vidange comprend également un module 22 de réinitialisation lorsque la vidange de l'huile moteur est réalisée.

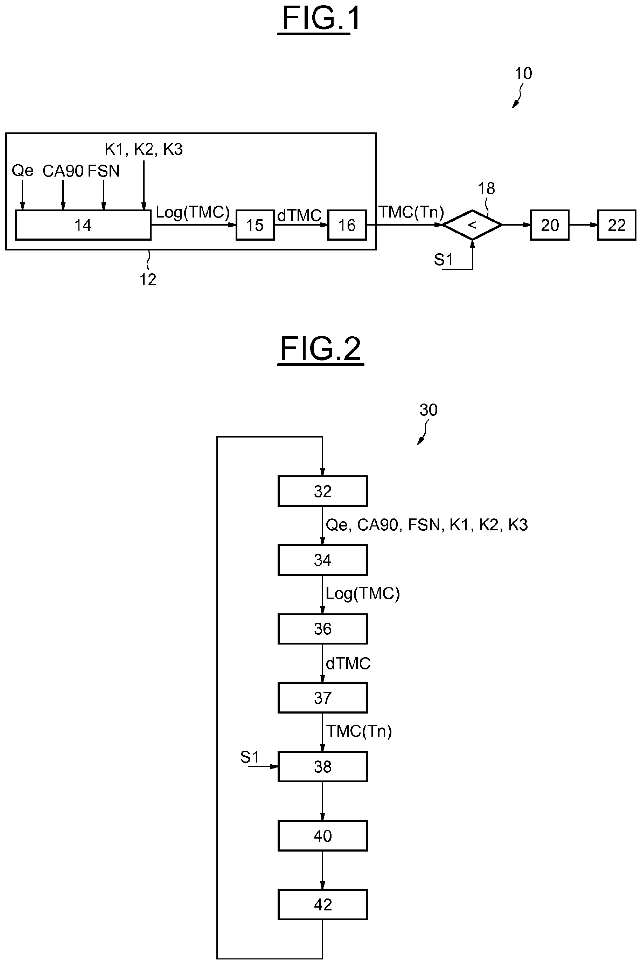

L'organigramme représenté sur la figure 2 illustre un exemple de procédé 30 mis en œuvre par le système représenté sur la figure 1.

Le procédé est itératif par pas de temps dT séparant deux itérations successives à des instants Tn et Tn+1. Il débute à un premier instant T0 auquel le taux de matières polluantes dans l'huile est nul, notamment après une vidange de l'huile moteur.

Le pas de temps dT, qui est le pas de calcul prédéterminé du procédé, est choisi suffisamment petit pour que l'on puisse considérer que moteur fonctionne sur un point de fonctionnement i régime/couple sensiblement constant, c'est-à-dire stabilisé.

Lors d'une première étape 32, on récupère deux résultats de la combustion, à savoir la valeur d'un angle CA90, en degré de vilebrequin, classiquement en degré d'angle par rapport au point mort haut (PMH) du cylindre considéré, pour lequel 90% du combustible a été consommé, et la valeur de l'opacité des fumées FSN. On récupère également la valeur Qe, directement obtenue à partir de cartographies d'injection et correspondant à la quantité de carburant injectée pour obtenir le couple moteur, ainsi que des coefficients empiriques K1, K2, K3 dépendants uniquement du régime moteur.

L'angle CA90 peut être calculé, à titre nullement limitatif, en fonction du dégagement d'énergie apparent selon les équations **Eq2** à **Eq.4** précédentes.

Ainsi, connaissant par ailleurs le dégagement total d'énergie $Q_{COMB}$ de la totalité de la masse de carburant et de comburant m introduite et enfermée dans le cylindre, on déduit que l'angle $\alpha$ de vilebrequin atteint la position CA90 lorsque l'intégrale calculée par l'équation 1 atteint 90% du dégagement total d'énergie $Q_{COMB}$.

Le calcul du CA90 n'est pas limité à la méthode décrite ci-dessus. On pourrait notamment déterminer la valeur du CA90 à partir de la pression de gaz mesurée directement dans la chambre de combustion, tel que décrit, par exemple, dans la demande de brevet JP 2009 168 708.

La valeur de l'opacité des fumées à l'échappement FSN peut être soit mesurée directement par un capteur, tel que décrit, par exemple, dans la demande de brevet DE 102015225745, soit calculée à partir de modèles mathématiques implantées dans le calculateur moteur, tel que décrit, par exemple, dans la demande de brevet JP 2015 190 397.

Lors d'une deuxième étape 34, on calcule pour chaque point de fonctionnement i régime/couple une estimation d'un taux de matières polluantes TMC présentes dans l'huile moteur au bout d'une durée relativement longue prédéterminée de fonctionnement du moteur sur le point de fonctionnement i régime/couple considéré, selon l'équation suivante qui en fournit le logarithme :

$$Log(TMC) = K1 \times Qe \times CA90 + K2 \times FSN + K3 \qquad \textbf{Eq.1}$$

Avec :

Qe, la quantité de carburant injectée dans la chambre de combustion, exprimée en milligrammes par coup mg/cp ;
CA90, la position angulaire dans le cycle moteur pour laquelle 90% du carburant a été brûlé, exprimée en degré vilebrequin ;
FSN, l'opacité des fumées ;
K1, K2, K3, des coefficients empiriques dépendant uniquement du régime moteur. Ces coefficients sont constants pour une géométrie du moteur et des caractéristiques techniques du système de combustion données. Ces coefficients peuvent être calibrés en banc d'essai par le constructeur automobile.

Lors d'une troisième étape 35, on calcule en temps réel une estimation d'un taux de matières polluantes dTMC ajoutées à l'huile moteur pendant le pas de temps dT, par les équations 5 et 6.

Lors d'une quatrième étape 36, on additionne l'ensemble des valeurs dTMC de taux de matières polluantes ajoutées à l'huile moteur qui ont été calculés pour chaque durée élémentaire de fonctionnement dT du moteur, sur les points de fonctionnement i régime/couple respectifs pendant ces durées élémentaires, afin d'obtenir la valeur finale TMC(Tn) du taux de matières polluantes dans l'huile moteur à l'instant Tn, c'est-à-dire pour une durée de fonctionnement Tn séparant l'instant initial (TO = 0 s) où on a initialisé le calcul et l'instant courant Tn.

Ensuite, à l'étape 38, on compare de ladite valeur finale TMC(Tn) du taux de matières polluantes dans l'huile moteur avec une valeur de seuil S1.

Lorsque la valeur finale TMC(Tn) du taux de matières polluantes dans l'huile moteur est supérieure à ladite valeur de seuil S1, on émet, à l'étape 40, une consigne de vidange.

Lorsque la valeur finale TMC(Tn) du taux de matières polluantes dans l'huile moteur pour un pas Pn de temps est inférieure à ladite valeur de seuil S1, on incrémente la valeur finale TMC(Tn) du taux de matières polluantes ajoutées pendant la durée élémentaire suivante dT au pas de calcul suivant, en procédant à une nouvelle itération du procédé à l'étape 32.

Enfin, lorsque la vidange de l'huile moteur est réalisée, on réinitialise, à l'étape 42, la valeur finale TMC(Tn) à zéro pour le pas de calcul suivant (nouvelle étape 32 et suivantes).

Grace à la présente invention, on peut estimer le taux de matières charbonneuses présentes dans l'huile moteur en fonction de deux résultats de la combustion et du débit de carburant, point de fonctionnement par point de fonctionnement, en utilisant uniquement les grandeurs accessibles par le calculateur moteur.

On peut ainsi estimer, en temps réel, l'accumulation des suies dans l'huile moteur et ainsi optimiser l'intervalle de vidange de l'huile moteur sans altérer la fiabilité du moteur et tout en réduisant au maximum les frais d'entretien.

## Revendications

**1.** Procédé d'optimisation de l'intervalle de vidange de l'huile moteur d'un moteur à combustion interne de type Diesel comprenant au moins un capteur de pression (P) de cylindre et une unité de commande, **caractérisé en ce que** l'on estime un pourcentage en masse de particules polluantes (TMC(Tn)) dans l'huile moteur pour une durée de fonctionnement du moteur (Tn), en fonction de la valeur d'un angle (CA90), en degré de vilebrequin, pour lequel 90% du combustible a été consommé en fonction de la pression mesurée (P) dans le cylindre, d'une valeur de l'opacité des fumées à l'échappement (FSN) et de la quantité (Qe) de carburant injectée dans la chambre de combustion ; dans lequel pour estimer ledit pourcentage en masse de particules polluantes (TMC(Tn)) :

- on estime, pour chaque point de fonctionnement (i) régime/couple du moteur, un taux de matières polluantes (TMC) présentes dans l'huile moteur après une durée prédéterminée relativement longue (T) que le moteur passerait sur ledit point de fonctionnement (i),
- on en déduit une estimation d'un taux de matières polluantes (dTMC) ajoutées à l'huile du moteur pendant une durée élémentaire (dT) prédéterminée relativement faible, pendant laquelle le moteur fonctionne sur un point de fonctionnement régime/couple (i) sensiblement stabilisé,
- on additionne l'ensemble des valeurs (dTMC) du taux de matières polluantes ajoutées à l'huile moteur pendant chaque durée élémentaire (dT) pendant laquelle le moteur fonctionne sur un point de fonctionnement (i) stabilisé donné, entre un instant initial (T0) auquel le taux de matières polluantes présentes dans l'huile est nul et un instant courant correspondant à la durée de fonctionnement (Tn) du moteur, afin d'obtenir la valeur finale (TMC(Tn)) du taux de matières polluantes dans l'huile moteur pour ladite durée de fonctionnement (Tn), et
- on compare ladite valeur finale (TMC(Tn)) du taux de matières polluantes dans l'huile moteur avec une valeur de seuil (S1), lorsque la valeur finale (TMC(Tn)) du taux de matières polluantes dans l'huile moteur est supérieure à ladite valeur de seuil (S1), on émet une consigne de vidange et lorsque la valeur finale (TMC(Tn)) du taux de matières polluantes dans l'huile moteur pour la durée de fonctionnement (Tn) de temps est inférieure à ladite valeur de seuil (S1), on incrémente ensuite la valeur finale (TMC(Tn)) du taux de matières polluantes de la valeur du taux de matières polluantes ajoutées à l'huile (dTMC) pendant la durée élémentaire de fonctionnement (dT) suivante du moteur.

**2.** Procédé selon la revendication 1, dans lequel lorsque la vidange de l'huile moteur est réalisée, on réinitialise la valeur finale (TMC(Tn)) pour le pas suivant.

**3.** Système (10) d'optimisation de l'intervalle de vidange de l'huile moteur d'un moteur à combustion interne de type Diesel comprenant au moins un capteur de pression (P) de cylindre et une unité de commande, **caractérisé en ce qu'**il comprend un module (12) d'estimation du pourcentage en masse de particules polluantes (TMC(Tn)) dans l'huile moteur pour une durée de fonctionnement du moteur (Tn), en fonction de la valeur d'un angle (CA90), en degré de vilebrequin, pour lequel 90% du combustible a été consommé en fonction de la pression mesurée (P) dans le cylindre, d'une valeur de l'opacité des fumées à l'échappement (FSN) et de la quantité (Qe) de carburant injectée dans la chambre de combustion, le module (12) d'estimation du pourcentage de particules polluantes (TMC(Tn)) dans l'huile moteur comprenant :

- un module (14) d'estimation, pour chaque point de fonctionnement (i) régime/couple du moteur, d'un taux de matières polluantes (TMC) présentes dans l'huile moteur pour une durée prédéterminée (T) de fonctionnement du moteur suffisante pour que le moteur passerait sur ledit point de fonctionnement (i),
- un module (15) d'estimation en temps réel d'un taux de matières polluantes (dTMC) ajoutées à l'huile du moteur pendant une durée élémentaire (dT) prédéterminée pendant laquelle le moteur fonctionne sur un point de fonctionnement (i) sensiblement stabilisé, -
- un module (16) pour additionner l'ensemble des valeurs du taux de matières polluantes ajoutées à l'huile moteur pour chaque durée élémentaire (dT) calculées par le module (15) d'estimation, afin d'obtenir la valeur finale (TMC(Tn)) du taux de matières polluantes dans l'huile moteur pour une durée de fonctionnement donnée (Tn) et dans lequel le système comprend un module (18) de comparaison de ladite valeur finale (TMC(Tn)) du taux de matières polluantes dans l'huile moteur avec une valeur de seuil (S1), ledit système comprenant un module (20) d'émission d'une consigne de vidange lorsque la valeur finale (TMC(Tn)) du taux de matières polluantes dans l'huile moteur est supérieure à ladite valeur de seuil (S1) et un module (16) d'incrémentation de la valeur finale (TMC(Tn)) du taux de matières polluantes par la valeur du taux de matières polluantes ajoutées à l'huile (dTMC)) pendant la durée élémentaire de fonctionnement (dT) suivante du moteur, si la valeur finale (TMC(Tn)) du taux de matières polluantes dans l'huile moteur est inférieure à ladite valeur de seuil (S1).

4. Système selon la revendication 3, comprenant un module (22) de réinitialisation lorsque la vidange de l'huile moteur est réalisée.

**Patentansprüche**

1. Verfahren zur Optimierung des Wechselintervalls des Motoröls einer Dieselbrennkraftmaschine, beinhaltend mindestens einen Sensor für den Druck (P) eines Zylinders und eine Steuereinheit, **dadurch gekennzeichnet, dass** ein Massenanteil an Schadstoffpartikeln (TMC(Tn)) im Motoröl für einen Betriebszeitraum des Motors (Tn) abgeschätzt wird, in Abhängigkeit von dem Wert eines Winkels (CA90), in Grad Kurbelwelle, bei dem 90 % des Brennstoffs in Abhängigkeit von dem gemessenen Druck (P) in dem Zylinder verbraucht wurden, einem Wert der Abgastrübung am Auspuff (FSN) und der Menge (Qe) an Kraftstoff, die in die Brennkammer eingespritzt wurde; wobei zur Abschätzung des Masseanteils an Schadstoffpartikeln (TMC(Tn)):

- für jeden Drehzahl-Drehmoment-Betriebspunkt (i) des Motors eine Rate an Schadstoffen (TMC), die sich nach einem vorbestimmten, relativ langen Zeitraum (T), den der Motor im Betriebszeitpunkt (i) verbracht hat, im Motoröl befinden, abgeschätzt wird,
- daraus eine Abschätzung einer Rate an Schadstoffen (dTMC), die während eines vorbestimmten, relativ kurzen Elementarzeitraums (dT), während dessen der Motor in einem im Wesentlichen stabilisierten Drehzahl-Drehmoment-Betriebspunkt (i) arbeitet, zu dem Motoröl hinzugefügt wurden, abgeleitet wird,
- alle Werte (dTMC) der Rate an Schadstoffen, die während jedes Elementarzeitraums (dT), während dessen der Motor in einem gegebenen stabilisierten Betriebspunkt (i) arbeitet, zu dem Motoröl hinzugefügt wurden, zwischen einem Anfangszeitpunkt (T0), zu dem die Rate an Schadstoffen, die sich im Öl befinden, Null ist, und einem aktuellen Zeitpunkt, der dem Betriebszeitraum (Tn) des Motors entspricht, zusammengezählt werden, um den Endwert (TMC(Tn)) der Rate an Schadstoffen im Motoröl für den Betriebszeitraum (Tn) zu erhalten, und
- der Endwert (TMC(Tn)) der Rate an Schadstoffen im Motoröl mit einem Schwellenwert (S1) verglichen wird und, wenn der Endwert (TMC(Tn)) der Rate an Schadstoffen im Motoröl größer als der Schwellenwert (S1) ist, eine Anweisung für einen Wechsel ausgegeben wird und, wenn der Endwert (TMC(Tn)) der Rate an Schadstoffen im Motoröl für den zeitlichen Betriebszeitraum (Tn) kleiner als der Schwellenwert (S1) ist, der Endwert (TMC(Tn)) der Rate an Schadstoffen im Anschluss um den Wert der Rate an Schadstoffen (dTMC), die während des nachfolgenden Elementarbetriebszeitraums (dT) des Motors zu dem Öl hinzugefügt wurden, inkrementiert wird.

2. Verfahren nach Anspruch 1, wobei, wenn der Wechsel des Motoröls durchgeführt wird, der Endwert (TMC(Tn)) für den nachfolgenden Schritt zurückgesetzt wird.

3. System (10) zur Optimierung des Wechselintervalls des Motoröls einer Dieselbrennkraftmaschine, beinhaltend mindestens einen Sensor für den Druck (P) eines Zylinders und eine Steuereinheit, **dadurch gekennzeichnet, dass** es ein Modul (12) zur Abschätzung des Massenanteils an Schadstoffpartikeln (TMC(Tn)) im Motoröl für einen Betriebszeitraum des Motors (Tn) beinhaltet, in Abhängigkeit von dem Wert eines Winkels (CA90), in Grad Kurbelwelle, bei dem 90 % des Brennstoffs in Abhängigkeit von dem gemessenen Druck (P) in dem Zylinder verbraucht wurden, einem Wert der Abgastrübung am Auspuff (FSN) und der Menge (Qe) an Kraftstoff, die in die Brennkammer eingespritzt wurde, wobei das Modul (12) zur Abschätzung des Anteils an Schadstoffpartikeln (TMC(Tn)) im Motoröl Folgendes beinhaltet:

- ein Modul (14) zur Abschätzung, für jeden Drehzahl-Drehmoment-Betriebspunkt (i) des Motors, einer Rate an Schadstoffen (TMC), die sich im Motoröl befinden, für einen vorbestimmten Betriebszeitraum (T) des Motors, der ausreicht, damit der Motor in den Betriebspunkt (i) übergeht,
- ein Modul (15) zur Abschätzung, in Echtzeit, einer Rate an Schadstoffen (dTMC), die während eines vorbestimmten Elementarzeitraums (dT), während dessen der Motor in einem im Wesentlichen stabilisierten Betriebspunkt (i) arbeitet, zu dem Motoröl hinzugefügt wurden,
- ein Modul (16), um alle Werte der Rate an Schadstoffen, die während jedes Elementarzeitraums (dT) zu dem Motoröl hinzugefügt wurden, die durch das Abschätzungsmodul (15) berechnet wurden, zusammenzuzählen, um den Endwert (TMC(Tn)) der Rate an Schadstoffen im Motoröl für einen gegebenen Betriebszeitraum (Tn) zu erhalten, und wobei das System ein Modul (18) zum Vergleichen des Endwerts (TMC(Tn)) der Rate an Schadstoffen im Motoröl mit einem Schwellenwert (S1) beinhaltet, wobei das System ein Modul (20) zur Ausgabe einer Anweisung für einen Wechsel, wenn der Endwert (TMC(Tn)) der Rate an Schadstoffen im Motoröl größer als der Schwellenwert (S1) ist, und ein Modul (16) zum Inkrementieren des Endwerts (TMC(Tn)) der Rate an Schadstoffen um den Wert der Rate an Schadstoffen (dTMC), die während des nachfolgenden Elementarbetriebszeitraums (dT) des Motors zu dem Öl hinzugefügt wurden, wenn der Endwert (TMC(Tn)) der Rate an Schadstoffen im Motoröl kleiner als der Schwellenwert (S1) ist, beinhaltet.

4. System nach Anspruch 3, das ein Modul (22) zum Zurücksetzen beinhaltet, wenn der Wechsel des Motoröls durchgeführt wird.

## Claims

1. Method for optimizing the interval of draining the engine oil of a diesel-type internal combustion engine comprising at least one cylinder pressure (P) sensor and a control unit, **characterized in that** a percentage by weight of polluting particles (TMC(Tn)) in the engine oil is estimated for an operating period of the engine (Tn), as a function of the value of an angle (CA90), in crank angle degrees, for which 90% of the fuel has been consumed as a function of the pressure (P) measured in the cylinder, of a value of the opaqueness of the exhaust fumes (FSN) and of the quantity (Qe) of fuel injected into the combustion chamber; wherein, to estimate said percentage by weight of polluting particles (TMC(Tn)):

- there is estimated, for each speed/torque operating point (i) of the engine, a level of polluting materials (TMC) present in the engine oil after a relatively long predetermined period (T) that the engine would spend at said operating point (i),
- there is deduced therefrom an estimation of a level of polluting materials (dTMC) added to the oil of the engine during a relatively short predetermined elementary period (dT), during which the engine operates at a substantially stabilized speed/torque operating point (i),
- there are added all of the values (dTMC) of the level of polluting materials added to the engine oil during each elementary period (dT) during which the engine operates at a given stabilized operating point (i), between an initial time (T0) at which the level of polluting materials present in the oil is zero and a current time corresponding to the operating period (Tn) of the engine, in order to obtain the final value (TMC(Tn)) of the level of polluting materials in the engine oil for said operating period (Tn), and
- said final value (TMC(Tn)) of the level of polluting materials in the engine oil is compared with a threshold value (S1), when the final value (TMC(Tn)) of the level of polluting materials in the engine oil is greater than said threshold value (S1), a drainage instruction is emitted and, when the final value (TMC(Tn)) of the level of polluting materials in the engine oil for the operating time period (Tn) is less than said threshold value (S1), the final value (TMC(Tn)) of the level of polluting materials is then incremented by the value of the level of polluting materials added to the oil (dTMC) during the following elementary operating period (dT) of the engine.

2. Method according to Claim 1, wherein, when the drainage of the engine oil is carried out, the final value (TMC(Tn)) is reinitialized for the following step.

3.  System (10) for optimizing the interval of draining the engine oil of a diesel-type internal combustion engine comprising at least one cylinder pressure (P) sensor and a control unit, **characterized in that** it comprises a module (12) for estimating the percentage by weight of polluting particles (TMC(Tn)) in the engine oil for an operating period of the engine (Tn), as a function of the value of an angle (CA90), in crank angle degrees, for which 90% of the fuel has been consumed as a function of the pressure (P) measured in the cylinder, of a value of the opaqueness of the exhaust fumes (FSN) and of the quantity (Qe) of fuel injected into the combustion chamber, the module (12) for estimating the percentage of polluting particles (TMC(Tn)) in the engine oil comprising:

    - a module (14) for estimating, for each speed/torque operating point (i) of the engine, a level of polluting materials (TMC) present in the engine oil for a predetermined operating period (T) of the engine that is sufficient for the engine to spend at said operating point (i),
    - a module (15) for estimating in real time a level of polluting materials (dTMC) added to the oil of the engine during a predetermined elementary period (dT) during which the engine operates at a substantially stabilized operating point (i),
    - a module (16) for adding all of the values of the level of polluting materials added to the engine oil for each elementary period (dT) that are calculated by the estimating module (15), in order to obtain the final value (TMC(Tn)) of the level of polluting materials in the engine oil for a given operating period (Tn) and wherein the system comprises a module (18) for comparing said final value (TMC(Tn)) of the level of polluting materials in the engine oil with a threshold value (S1), said system comprising a module (20) for emitting a drainage instruction when the final value (TMC(Tn)) of the level of polluting materials in the engine oil is greater than said threshold value (S1), and a module (16) for incrementing the final value (TMC(Tn)) of the level of polluting materials by the value of the level of polluting materials added to the oil (dTMC) during the following elementary operating period (dT) of the engine, if the final value (TMC(Tn)) of the level of polluting materials in the engine oil is less than said threshold value (S1).

4.  System according to Claim 3, comprising a module (22) for reinitializing when the drainage of the engine oil is carried out.

# FIG.1

# FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6253601 B1
- EP 2653677 A2
- JP 2009168708 B
- DE 102015225745
- JP 2015190397 A
- JP 2015190397 B